# EUROPEAN PATENT APPLICATION

(11) **EP 4 471 287 A1**
(43) Date of publication of application: **04.12.2024**
(21) Application number: 23176137.0
(22) Date of filing: 30.05.2023
(51) Int. Cl.: F16D 55/2265, F16D 55/227, F16D 66/02

(54) **A GUIDE ASSEMBLY FOR A DISC BRAKE**

(71) Applicant: Meritor Heavy Vehicle Braking Systems (UK) Limited, Cwmbran, Gwent NP44 3XU (GB)
(72) Inventor: Jenkins, Daniel, Cwmbran (GB); Watkins, Rhys, Cwmbran (GB)
(74) Representative: Anderson, Nicola Unity

(57) **Abstract**

A caliper guide assembly for a heavy vehicle disc brake, the guide assembly comprising a guide pin, a guide bore arranged to receive the guide pin and permit relative axial sliding thereof, a bush arranged to define at least part of the guide bore, and a sensor arrangement configured to provide an output indicative of a state of wear of the bush. The sensor arrangement is configured to continuously detect a state of wear of the bush.

## Description

### FIELD

The present invention relates to a caliper guide assembly for a heavy vehicle disc brake.

### BACKGROUND

Disc brakes are commonly used for braking heavy vehicles such as trucks, buses and coaches. Heavy vehicle disc brakes typically include a brake carrier, a brake caliper and a brake rotor. The brake carrier is arranged to carry brake pads on each side of the brake rotor. The brake caliper is mounted on the brake carrier and slidably supported by at least one guide assembly such that, when the disc brake is actuated, the brake caliper is able to slide with respect to the brake carrier. As the brake caliper slides inboard, the brake pads are urged onto the opposing faces of the rotor in a clamping action and a braking action is achieved.

The guide assembly has a guide pin slidably arranged in a guide bore. The guide pin can be secured to the brake carrier and slidably arranged in a guide bore disposed in the brake caliper so that the brake caliper can slide along the guide pin relative to the brake carrier.

Typically, the guide bore is defined by a bush disposed within a recess or through hole defined by the brake caliper. In use, the bush will wear due to movement of the guide pin in relation to the guide bore and vibration of the disc brake. The bush is replaceable, and is intended to be replaced regularly, e.g. upon service of the disc brake. However, it may be that a bush becomes worn beyond service guidelines between service or inspection intervals. Visual inspection of bush wear can be time-consuming and inconvenient, as it involves some disassembly and reassembly of the disc brake.

Such an overly worn bush may lead to unwanted rattling noise on movement between the guide pin and the guide bore. Such noise is more apparent in electric vehicles, due to the quieter operation of such vehicles in comparison to those having an internal combustion engine. The increase in the use of electric vehicles will therefore lead to greater awareness of brake noise.

In addition, an overly worn bush may fail to prevent contact between the guide pin and the brake caliper, potentially leading to damage of the guide pin, as well as uneven brake pad wear or binding or seizing of the brake caliper. An overly worn bush can also lead to unwanted contact between the brake caliper and other components of the disc brake, potentially causing damage of those components.

The present teachings seek to overcome or at least mitigate the problems of the prior art.

### SUMMARY

A first aspect of the present teachings provides a caliper guide assembly for a heavy vehicle disc brake, the guide assembly comprising a guide pin, a guide bore arranged to receive the guide pin and permit relative axial sliding thereof, a bush arranged to define at least part of the guide bore, and a sensor arrangement configured to provide an output indicative of a state of wear of the bush. The sensor arrangement is configured to continuously detect a state of wear of the bush.

Advantageously, continuous detection of a state of wear of the bush allows an indication of the state of wear to be provided on demand. It can therefore be determined between scheduled services whether the bush is at a state of wear at which it should be replaced. In addition, if the bush is not yet at a replacement state of wear, it can be predicted when the bush is likely to require replacement, based on the current state of wear. Excessive wear of the bush can thus be easily prevented.

Continuous monitoring also allows rate of wear to be determined. The rate of bush wear can be used as an indication of the operating state of the remaining brake components, in particular the remaining caliper guide assembly components. For example, an excessive rate of wear over a predetermined time period may indicate an issue such as loosening of a guide pin bolt, which can then be inspected and addressed.

The sensor arrangement may be configured to detect a maximum thickness of the bush.

The caliper guide assembly may further comprise a housing, wherein the guide bore may comprise a wall defined by the housing, and wherein the sensor arrangement may be configured to detect a radial distance between the wall and the guide pin.

Detection of the radial distance between the guide bore wall and the guide pin allows detection of bush wear. As the bush wears, the distance between the guide bore wall and the guide pin increases, and so measuring this distance enables calculation of bush wear.

The sensor arrangement may comprise at least two sensors.

Providing multiple sensors multiple measurements to be taken, and so improves the accuracy of bush wear detection

The sensors may be disposed at substantially 180° to one another about the circumference of the guide bore.

The sensors may be disposed at substantially 90° to one another about the circumference of the guide bore.

Arranging sensors at 180° and/or 90° to one another about the circumference of the guide bore allows multiple measurements to be taken at effective points about the circumference, so improving accuracy of bush wear detection.

The guide bore may have an uppermost point and a lowermost point.

The caliper guide assembly may comprise a first sensor at said uppermost point and a second sensor at said lowermost point.

Such an arrangement provides measurement at the point of maximum and minimum bush wear, due to the relationship between the caliper and the guide pin, so improving bush wear detection.

At least two sensors may be disposed at substantially the same point along a longitudinal axis of the guide bore.

Arranging multiple sensors at multiple points around the circumference of the guide bore at a single point along the longitudinal axis allows measurements to be taken at different points around the circumference of the guide bore, and so improves the accuracy of bush wear detection.

At least one sensor may be disposed at more than one point along a longitudinal axis of the guide bore.

Arranging sensors at multiple points along the length of the guide bore allows measurements to be taken at different points along the length of the guide bore, and so improves the accuracy of bush wear detection.

In particular, arranging sensors at different locations along and around the guide bore allows measurements to be taken at points where greatest bush wear is likely, so improving bush wear detection. It is most useful to determine maximum bush wear, in order to provide the most useful information regarding replacement of a bush.

The sensor arrangement may comprise at least one sensor positioned inboard of the bush or both or all bushes.

The sensor arrangement may comprise at least one sensor positioned outboard of the bush or both or all bushes.

The caliper guide assembly may comprise two or more bushes.

The sensor arrangement may comprise at least one sensor positioned between two bushes.

Positioning of sensors along the guide bore can be chosen based on where bush wear is likely to be greatest, and on assembly strategy. Positioning a sensor or sensors to inboard of the or all bushes allows fitting and/or replacement of said sensor(s) without removal of a bush or bushes. Fitting and/or replacement of said sensor(s) can thus be simply carried out during servicing of a brake.

The sensor arrangement may comprise an annulus received within the guide bore such that the guide pin extends through the annulus.

One or more sensors mounted to an inner diameter of the annulus may be configured to detect a radial distance to the guide pin.

The annulus may be secured within the guide bore via an interference fit with a wall defined by the housing.

The annulus may be secured within the guide bore by means of a keyway.

The annulus allows a sensor or sensors to be easily and quickly fitted to the guide assembly in a desired position. That is, if two sensors at 180° to one another are required, the sensors can be fitted to the annulus. The annulus is then fitted to the guide assembly at the desired orientation.

Advantageously, the annulus can easily be retrofitted to an existing guide assembly.

The guide bore may comprise a wall defined by the housing.

The sensor arrangement may comprise one or more sensors mounted to the housing, preferably wherein the or each sensor is mounted directly to the wall.

The or each sensor may comprise a threaded portion.

The housing may define one or more threaded bores each configured to receive a threaded portion of a sensor.

Direct mounting of the or each sensor to the housing avoids the need for additional components

The sensor arrangement may comprise a capacitive sensor.

A capacitive sensor is a suitable and effective means of measuring the radial distance.

The sensor may be an ultrasonic sensor.

An ultrasonic sensor is a suitable type of sensor for measuring the radial distance.

A second aspect of the present teaching provides a sensor arrangement for a caliper guide assembly for a heavy vehicle disc brake, the sensor arrangement comprising an annulus and one or more sensors mounted to an inner diameter of the annulus and configured to detect a radial distance in an inward direction therefrom.

The sensor arrangement may comprise two sensors disposed at substantially 180° to one another about the circumference of the annulus.

The sensor arrangement may comprise two or more sensors disposed at substantially 90° to one another about the circumference of the annulus.

Arranging sensors at 180° and/or 90° to one another about the circumference of the annulus, and thus the guide bore, allows multiple measurements to be taken at effective points about the circumference, so improving accuracy of bush wear detection.

### BRIEF DESCRIPTION OF THE DRAWINGS

Embodiments will now be described, by way of example only, with reference to the accompanying figures, in which:
Figure 1 is an isometric view, partially cut away to improve clarity, of a disc brake according to the present teachings;
Figure 2 is a cross-sectional detail view of a guide assembly according to the present teachings;
Figure 3 is a cross-sectional detail view of the guide assembly of Figure 2 in a first state of wear;
Figure 4 is a cross-sectional detail view of the guide assembly of Figures 2 and 3 in a second state of wear;
Figure 5 is a side view of a sensor arrangement of the guide assembly of Figures 2 to 4;
Figure 6 is a cross-sectional detail view of a guide assembly according to the present teachings;
Figure 7 is a cross-sectional detail view of a guide assembly according to the present teachings;
Figure 8 is a cross-sectional detail view of a further guide assembly according to the present teachings; and
Figure 9 is an isometric detail view of the guide assembly of Figure 8.

### DETAILED DESCRIPTION

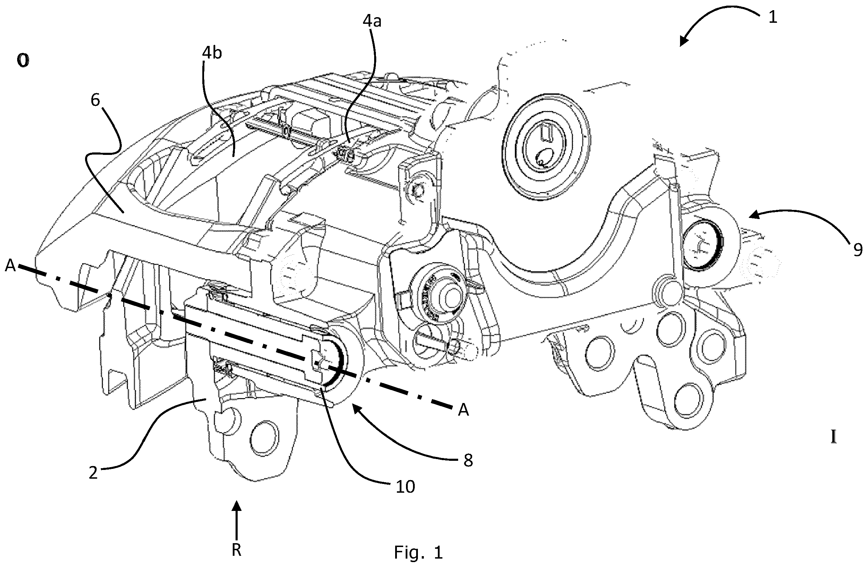

With reference to Figure 1, a disc brake of the present teachings is indicated generally at 1. Various orientations of the disc brake are described. In particular the directions inboard I and outboard O refer to the typical orientation of the disc brake when fitted to a vehicle and with reference to the longitudinal centreline of the vehicle. The radial direction R refers to an orientation with reference to the centre of a brake rotor (axis A-A) and is for example the direction in which brake pads may be fitted to and removed from a disc brake.

The disc brake 1 has a brake carrier 2. The brake carrier 2 carries an inboard brake pad 4a and an outboard brake pad 4b. A brake rotor (not shown) is positioned between the brake pads and is rotatable about the axis A-A. A brake caliper 6 is slidably mounted on the brake carrier 2.

The disc brake 1 has at least one guide assembly. In the depicted embodiment the disc brake 1 has first and second guide assemblies 8, 9. The guide assemblies 8, 9 slidably support the brake caliper 6 and allow the brake caliper 6 to slide in an inboard-outboard direction relative to the brake carrier 2.

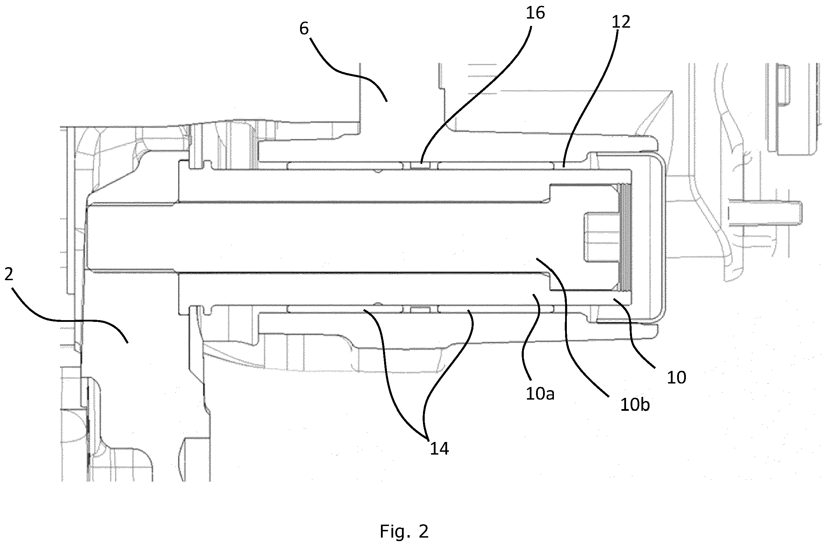

As shown in Figures 1 and 2, the first guide assembly 8 has a guide pin 10 and a guide bore 12. In this embodiment, the guide pin 10 is secured to the brake carrier 2. In this embodiment, the guide bore 12 is disposed in the brake caliper 6. The guide bore 12 is arranged to receive the guide pin 10 and permit relative axial sliding thereof, so that the brake caliper 6 is slidably supported in relation to the brake carrier 2.

In this embodiment, the guide pin 10 has a guide sleeve 10a secured to the caliper by a fastener 10b. In other embodiments, some other type of guide pin is used, e.g. a monolithic guide pin, or a guide sleeve attached to the carrier by some other means, e.g. welding.

Each guide assembly 8, 9 has a guide pin of a different length. The first guide assembly 8 has a longer guide pin 10 than that of the second guide assembly 9. The fit between the guide pin 10 and the guide bore 12 of the first guide assembly 8 is tighter than that of the guide pin and guide bore of the second guide assembly 9. The greater extent of wear of a guide bush therefore takes place at the first guide assembly 8.

The first guide assembly 8 has at least one bush 14 arranged to define at least part of the guide bore 12. In this embodiment, the guide assembly 8 has two bushes 14. In an alternative embodiment, the guide assembly 8 has a single bush, or more than two bushes.

The guide assembly includes a sensor arrangement 16 configured to provide an output indicative of a state of wear of the bush or bushes 14.

In providing an indication of the state of wear of the bushes 14, the sensor arrangement advantageously gives an indication of whether the bushes 14 should be replaced. That is, an operator such as a driver or mechanic can obtain an indication of the state of wear of the bushes 14, for example in the cab of a vehicle, and can reach a decision on whether or not the bushes 14 should be replaced in order to avoid excess wear or damage to other components of the disc brake 1 without needing to carry out a visual inspection of the bushes 14. The time taken to carry out such a visual or physical inspection is thus advantageously saved, and the likelihood of a worn bush causing unwanted noise or damage to other components of the disc brake 1 is reduced.

In addition, the life of the bush may be extended. Without the sensor arrangement 16, a slightly worn bush may be replaced as a precaution during a brake service despite not reaching the service guideline level of wear, in order to avoid the service guideline or replacement level of wear between servicing of the disc brake. The guideline replacement level of wear may vary from model to model of disc brake, but is defined for each type of disc brake, for example in the service manual for that disc brake. Wear of the bush is measured using a dial gauge mounted on the disc brake to detect the amount of movement possible between brake components and the vehicle, e.g. between the brake caliper and the wheel hub. Typically, in a disc brake of the type shown in Figure 1, a bush requires replacement when 2 to 3mm of movement between the brake caliper and the wheel hub is possible. This is likely to occur when the greatest extent of bush wear is in the region of 1mm, or between 0.5mm and 1mm.

With the sensor arrangement 16 providing an indication of wear between inspections of the brake, a slightly worn bush can be left in place, and the full life or a greater extent of the life of the bushes 14 can be expended, so saving costs.

The sensor arrangement 16 is configured to continuously detect a state of wear of the bushes 14. That is, the state of wear of the bush is constantly monitored, allowing an indication of the state of wear of the bush to be given as required, i.e. at any time. For example, an indication of the state of wear of the bush could be given at regular intervals if desired, or on demand.

The sensor arrangement 16 has at least one sensor cable (not shown) extending therefrom in order to connect the sensor arrangement 16 to the vehicle to which the disc brake 1 is fitted. A suitable connector (not shown) for connecting the sensor arrangement 16 to wiring of a control system of the vehicle is provided.

Advantageously, the state of wear of the bush can be indicated to a user between scheduled services. A prediction of when the bush is likely to require a replacement can be given. A user could be given an indication when a pre-determined state of wear has been reached, e.g. to allow servicing of the brake to be scheduled.

Continuous monitoring of the state of wear of the bush allows the rate of wear of the bush to be determined. An excessive rate of wear of the bush, i.e. an unexpectedly high rate of wear, may be an indication that other components of the disc brake are not functioning optimally, e.g. that the guide bolt is loose. Continuous monitoring can thus advantageously lead to detection and correction of such issues.

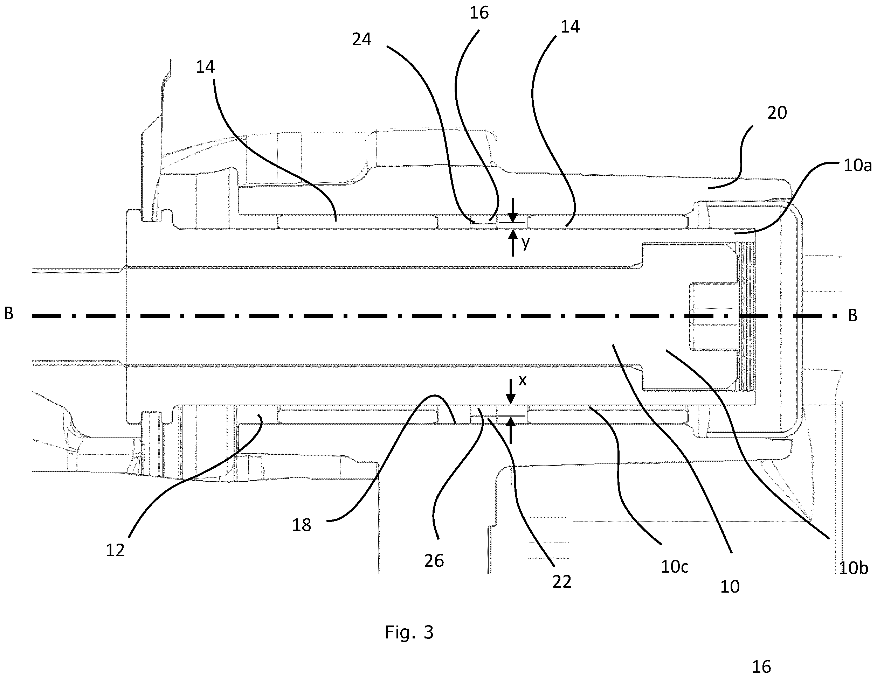

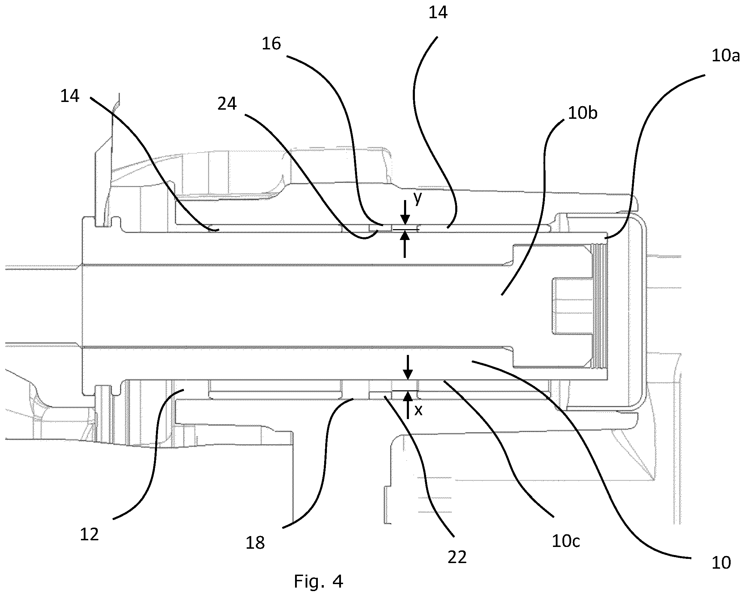

In this embodiment, the sensor arrangement 16 is configured such that a maximum thickness of the bushes 14 is detected, and the state of wear of the bushes 14 calculated therefrom. Figures 3 and 4 show how the sensor arrangement 16 of this embodiment detects the state of wear of the bushes 14 of this embodiment. The sensor arrangement 16 is arranged to detect a radial distance x, y between a wall 18 of the guide bore and the guide pin 10. The wall 18 is defined by a housing 20 of the brake caliper 6. In this embodiment, wherein the guide pin 10 comprises the guide sleeve 10a, the sensor arrangement 16 is arranged to detect a distance x, y between the wall 18 and an outer surface 10c of the guide sleeve 10a.

As shown in Figures 3 and 4, the guide pin 10 is supported in the guide bore 12 by the bushes 14. The state of wear of the bushes 14 thus dictates the radial distance between the guide pin outer surface 10c and the wall 18, such that measurement of the radial distance x, y allows calculation of the state of wear of the bushes 14.

Figure 3 shows the caliper guide assembly 8 where the bushes 14 are in a relatively unworn state. In this embodiment, the sensor arrangement 16 has first and second sensors 22, 24. In alternative embodiments, the sensor arrangement includes only a single sensor, or more than two sensors. In this embodiment, the first and second sensors 22, 24 are arranged at the same point along a longitudinal axis B of the guide bore 12.

In this embodiment, the first sensor 22 and the second sensor 24 are arranged at substantially 180° to one another about the circumference of the guide bore 12. Arranging the sensors 22, 24 at different points around the circumference of the guide bore 12 allows the radial distance between the wall 18 and the guide pin surface 10c to be measured at different points, so improving the accuracy of calculation of the state of wear of the bushes 14.

In alternative embodiments, the sensor arrangement has multiple sensors arranged at different locations of the guide bore 12. In this embodiment, the sensors 22, 24 are arranged between the bushes 14 in a longitudinal direction. As discussed in further detail below, sensors are in alternative embodiments arranged at other points along the longitudinal axis B of the guide bore 12, and/or at multiple points along the longitudinal axis B.

In alternative embodiments, the sensor arrangement of sensors is arranged at different points about the circumference of the guide bore. For example, the sensor arrangement may have two sensors arranged at some angle to one another other than 180 degrees, e.g. 90 degrees, or 120°. In one embodiment (not shown), the sensor arrangement has four sensors arranged at 90 degrees to one another about the circumference of the guide bore. In alternative embodiments, other suitable arrangements of sensors are used. The sensors may be arranged at irregular intervals about the circumference of the guide bore.

In this way, the sensors can be arranged about the guide bore so as to measure the radial distance between the wall 18 and the guide pin surface 10c at the most useful locations, and so detection of the state of wear of the bush or bushes 14 can be optimised.

In the embodiment depicted in Figures 3 and 4, the sensors 22, 24 are located in the guide bore at the likely points of maximum and minimum clearance between the wall 18 and the guide pin 10. The caliper housing 20 is supported on the guide pin 10. The second sensor 24 is located at the point on the guide bore 12 where the guide bushes 14 are in contact with the guide pin 10, i.e. the point of minimum clearance y between the sensor 24 and the guide pin surface 10c.

As the first sensor 22 is arranged at an angle of 180° to the second sensor 24, it is arranged at a point where the clearance x between the sensor 22 and the guide pin surface 10c is at a maximum. Measuring maximum and minimum clearance x, y provides the optimal measurement data for calculating the state of wear of the bushes 14.

The guide bore 12 has an uppermost point and a lowermost point. The uppermost and lowermost points of the guide bore depend on the orientation of the disc brake 1 in relation to the vehicle. In this embodiment, the first sensor 22 is arranged at the uppermost point, and the second sensor 24 is placed at the lowermost point. This allows the sensor to measure the points of maximum and minimum bush wear.

Figure 4 shows the caliper guide assembly 8 where the bushes 14 are in a relatively worn state. As can be seen from Figure 4, the distance x measured by the first sensor 22 has increased in comparison with that of Figure 3, and the distance y has decreased, due to the reduced thickness of the guide bushes 14. One or both of the distances x, y can be used to calculate the state of wear of the bushes 14. Using measurements taken at multiple points about the circumference of the guide bore 12 improves the accuracy of state of wear detection.

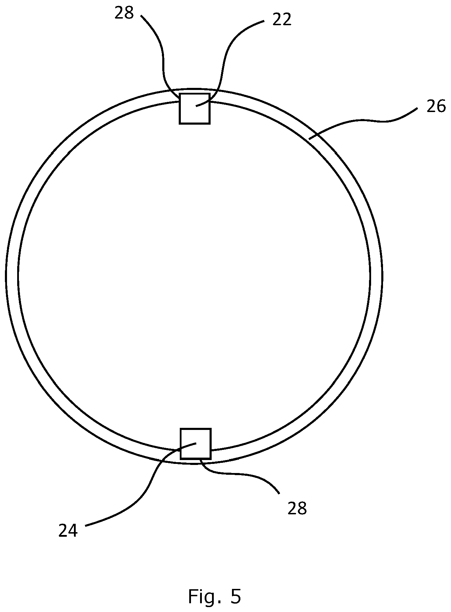

In this embodiment, the sensors 22, 24 are mounted within the guide bore upon an annulus 26. As shown in Figure 5, the sensors 22, 24 are mounted to the annulus 26 in the desired relative locations, i.e. in this embodiment at 180° to one another, or substantially 180° to one another. The sensors 22, 24 are in this embodiment mounted to the annulus 26 via a screw thread, and the annulus 26 defines corresponding threaded apertures 28 in which the sensors 22, 24 are received. In an alternative embodiment, the sensors are mounted in another suitable way to the annulus, for example via an adhesive.

The annulus 26 is of any suitable non-conductive material, e.g. PEEK (polyether ether ketone) or nylon.

The annulus 26 is located within the guide bore 12 such that the guide pin 10 can extend through the annulus 26. The sensors 22, 24 are thus arranged about the circumference of the guide pin 10, i.e. suitably arranged to detect the radial distance to the guide pin surface 10c.

The annulus 26 is secured within the guide bore 12 in such a way as to prevent relative movement of the annulus 26 within the guide bore 12, in both circumferential and longitudinal directions. In this embodiment, the annulus 26 is secured within the guide bore 12 with by an interference fit with the wall 18. In alternative embodiments (not shown), the annulus is secured within the guide bore by means of a keyway, or by adhesive, or secured with silicone, or by some other suitable means.

The internal diameter of the annulus 26, is configured to be larger than the internal diameter of the bush or bushes even in the most worn state, i.e. such that clearance remains between the annulus 26 and the guide pin 10.

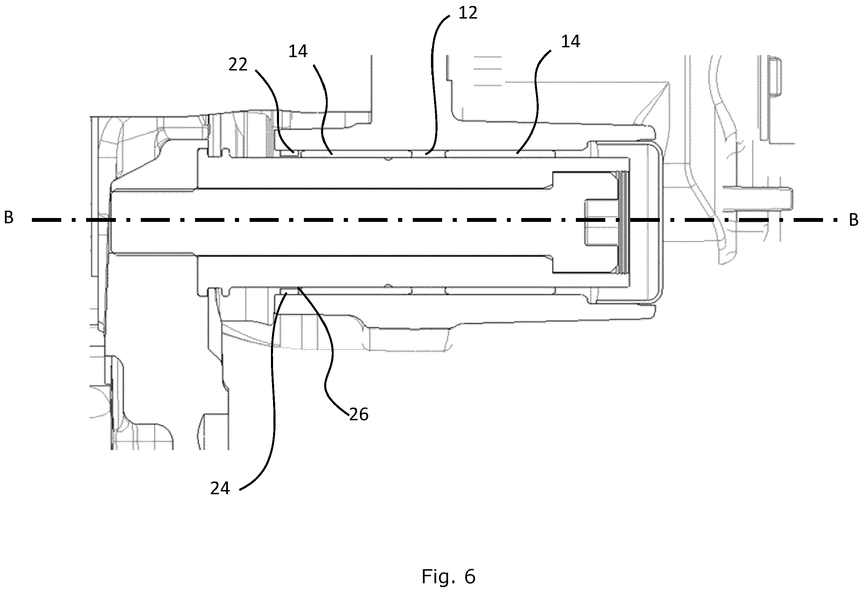

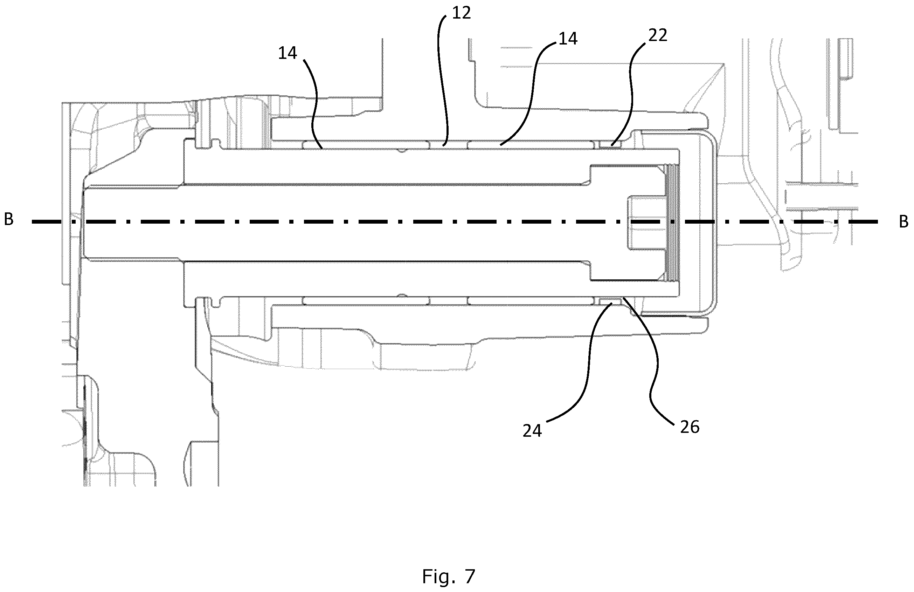

Figures 6 and 7 show alternative arrangements of the sensor arrangement 16. In the embodiment of Figure 6, the annulus 26 is located outboard of the bushes 14. Such an arrangement allows measurement of the radial distance between the sensors 22, 24 and the guide pin at an alternative point along the longitudinal axis B along the guide bore, i.e. at the outboard end of the guide bore 12, where significant bush wear is likely to take place.

The greatest of extent of wear in a guide assembly such as that shown in Figures 1-9 typically takes place at the outer end of each bush i.e. at the inboard end of the inboard bush and the outboard end of the outboard bush. Typically, wear is greatest at the outboard end of the outboard bush. The sensor arrangement being deployed at the outboard most end of the bushes 14, i.e. the layout shown in Figure 6, is suitable for detecting maximum wear.

In the embodiment shown in Figure 7, the annulus 26 is arranged to the inboard side of the bushes 14. Advantageously, the annulus 26 and therefore the sensors 22, 24 can be replaced or fitted without the need to remove the bushes 14 from the guide assembly 8.

In further alternative embodiments (not shown), more than one annulus with a sensor or sensors mounted thereto is included in the sensor arrangement, in one or more of the locations shown in Figures 2, 6 and 7. That is, an annulus and associated sensors can be mounted at the outboard and inboard end of the bush or bushes, or, in embodiments where there are multiple bushes, between the bushes, as well as at one or both ends of the bushes.

The arrangement of the sensors can advantageously be selected depending on measurement and assembly requirements.

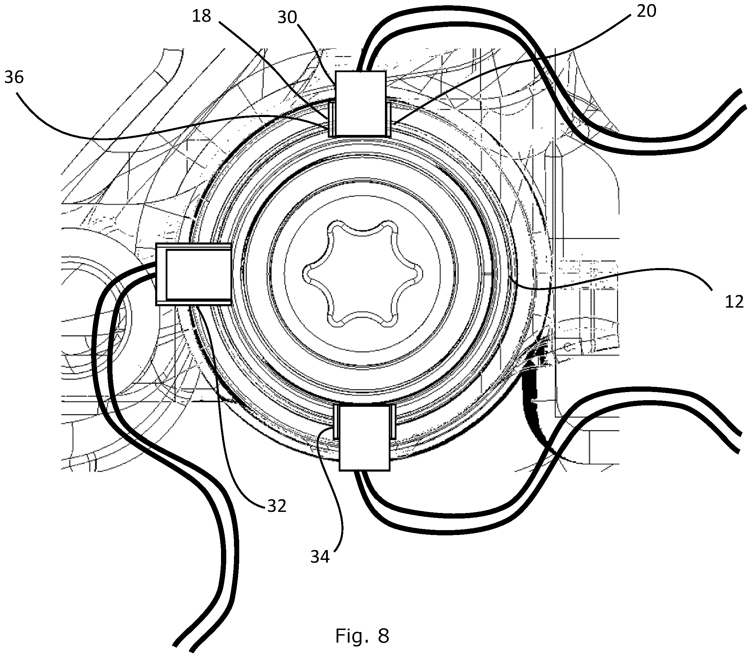

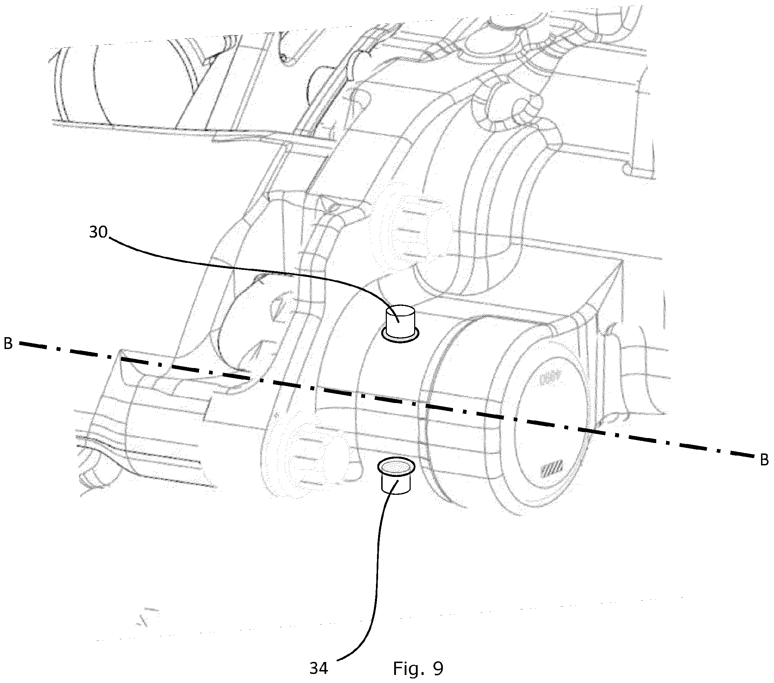

An alternative embodiment is disclosed in Figures 8 and 9. In this embodiment, the sensor arrangement 16 has sensors 30, 32, 34 mounted directly to the housing 20. In this embodiment, the housing 20 defines a threaded aperture 36 corresponding to each sensor 30, 32, 34, i.e. at the location at which each sensor 30, 32, 34 is to be positioned. The housing 20 defines an aperture 36 in the wall 18, such that each sensor 30, 32, 34 can be positioned so as to be able to detect the radial distance to the surface 10c of the guide pin 10, for engagement with a corresponding thread on each sensor 30, 32, 34.

In alternative embodiments, the sensors 30, 32, 34 are secured to the housing 20 by some other means, e.g. by an interference fit or by some suitable adhesive. In alternative embodiments, the sensors 30, 32, 34 are directly mounted to the housing 20 at some alternative location along the longitudinal axis B of the guide bore 12.

As shown in Figure 8, in this embodiment, the sensors 30, 32, 34 are located at substantially 90 degrees to one another about the circumference of the guide bore 12. In alternative embodiments, a single sensor is included in the sensor arrangement, or two, or four or more sensors are included therein. In alternative embodiments, the sensors are located at some other circumferential distance to one another at the guide bore 12.

In the embodiments described herein, the sensors 22, 24, 30, 32, 34 are capacitive sensors. Such a sensor can simply detect the radial distance to the guide pin surface 10c, as the guide pin surface 10c interrupts the electric field emitted by each sensor. Capacitive sensors are suitable for this application as they are capable of effectively and accurately measuring the order of distance required. Advantageously, capacitive sensors are contactless, so that the sensors do not wear so do not need to be replaced. Nor do such sensors cause any unwanted drag. In alternative embodiments, the sensors of the sensor arrangement are ultrasonic sensors. Such sensors are readily available and thus cost effective. In alternative embodiments, another suitable type of sensor is used.

The bush or bushes 14 may have in some embodiments a pre-determined state of wear, i.e. a particular level of wear at which it has been determined that an indication of said level of wear would be of use to an operator. In one embodiment, the sensor arrangement 16 is configured to provide an output indicative of whether the bush or bushes 14 has or have reached a pre-determined state of wear, i.e. to alert the operator that this predetermined state of wear has been reached. For example, the pre-determined state of wear may be a replacement state of wear, i.e. the level of wear at which the bush or bushes should be replaced in order to avoid damage to other components of the disc brake 1. Alternatively, the pre-determined state of wear is such that an indication is given that the bush or bushes are likely to require replacement in the near future, e.g. after a particular number of further driven miles. Appropriate servicing can then be scheduled.

Such a pre-determined state of wear can be customised for a particular type of bush, e.g. depending on the bush construction and material(s), and/or the type of disc brake in which the bush is installed. The life of the disc brake 1 can thus be increased.

The sensor arrangement 16 can be used with one or both caliper guide assemblies of a brake.

## Claims

1. A caliper guide assembly for a heavy vehicle disc brake, the guide assembly comprising:
a guide pin;
a guide bore arranged to receive the guide pin and permit relative axial sliding thereof;
a bush arranged to define at least part of the guide bore; and
a sensor arrangement configured to provide an output indicative of a state of wear of the bush;
wherein the sensor arrangement is configured to continuously detect a state of wear of the bush.

2. The caliper guide assembly according to claim 1, wherein the sensor arrangement is configured to detect a maximum thickness of the bush.

3. The caliper guide assembly according to claim 1 or claim 2, further comprising a housing, wherein the guide bore comprises a wall defined by the housing, and wherein the sensor arrangement is configured to detect a radial distance between the wall and the guide pin.

4. The caliper guide assembly according to any one of claims 1 to 3, wherein the sensor arrangement comprises at least two sensors; preferably wherein the sensors are disposed at substantially 180° to one another about the circumference of the guide bore; and/or wherein the sensors are disposed at substantially 90° to one another about the circumference of the guide bore.

5. The caliper guide assembly according to claim 4, wherein the guide bore has an uppermost point and a lowermost point, and wherein the caliper guide assembly comprises a first sensor at said uppermost point and a second sensor at said lowermost point.

6. The caliper guide assembly according to claim 4 or claim 5, wherein at least two sensors are disposed at substantially the same point along a longitudinal axis of the guide bore.

7. The caliper guide assembly according to any one of claims 4 to 6, wherein at least one sensor is disposed at more than one point along a longitudinal axis of the guide bore.

8. The caliper guide assembly according to any preceding claim, wherein the sensor arrangement comprises at least one sensor positioned inboard of the bush or both or all bushes.

9. The caliper guide assembly according to any preceding claim, wherein the sensor arrangement comprises at least one sensor positioned outboard of the bush or both or all bushes.

10. The caliper guide assembly according to any preceding claim, comprising two or more bushes, wherein the sensor arrangement comprises at least one sensor positioned between two bushes.

11. The caliper guide assembly according to any preceding claim, wherein the sensor arrangement comprises an annulus received within the guide bore such that the guide pin extends through the annulus; and one or more sensors mounted to an inner diameter of the annulus and configured to detect a radial distance to the guide pin; preferably wherein the annulus is secured within the guide bore via an interference fit with a wall defined by the housing, and/or wherein the annulus is secured within the guide bore by means of a keyway.

12. The caliper guide assembly according to any one of claims 1 to 10, further comprising a housing, wherein the guide bore comprises a wall defined by the housing, and wherein the sensor arrangement comprises one or more sensors mounted to the housing, preferably wherein the or each sensor is mounted directly to the wall; preferably wherein the or each sensor comprises a threaded portion, and wherein the housing defines one or more threaded bores each configured to receive a threaded portion of a sensor.

13. The caliper guide assembly according to any preceding claim, wherein the sensor arrangement comprises a capacitive sensor; or wherein the sensor arrangement comprises an ultrasonic sensor.

14. A sensor arrangement for a caliper guide assembly for a heavy vehicle disc brake, the sensor arrangement comprising:
an annulus; and
one or more sensors mounted to an inner diameter of the annulus and configured to detect a radial distance in an inward direction therefrom.

15. The sensor arrangement according to claim 14, wherein the sensor arrangement comprises two sensors disposed at substantially 180° to one another about the circumference of the annulus; and/or wherein the sensor arrangement comprises two or more sensors disposed at substantially 90° to one another about the circumference of the annulus.
